# EUROPEAN PATENT APPLICATION

(11) **EP 2 922 030 A1**
(43) Date of publication of application: **23.09.2015**
(21) Application number: 15382094.9
(22) Date of filing: 04.03.2015
(51) Int. Cl.: G07B 15/02

(54) **Car park time management and payment method for automobile vehicles**

(30) Priority: 21.03.2014 ES 201430396
(71) Applicant: B:SM Barcelona de Serveis Municipals, S.A., 08028 Barcelona (ES)
(72) Inventor: Bordell Sarro, Jaume, 08028 Barcelona (ES)
(74) Representative: Espiell Volart, Eduardo Maria

(57) **Abstract**

A payment server (4) is sent a registration signal comprising an identifying signal of the vehicle (1) or of the user (2), and of the geographic position of the vehicle, which has associated a mobile device (3), with a wireless communication apparatus. When the vehicle parks in a space (7), the user introduces in the mobile device, a start instruction of the software of the method and of start of parking; the mobile device sends to the payment server, through internet 6, the registration signal and of request of parking service; the payment server (4) calculates, from the geographic positioning data of the space (7) and of the information from a database (5), the hourly rate applicable to the space (7); the payment server (4) sends to the mobile device (3), the information relating to the hourly rate and other conditions; and may send to the mobile device (3) of the user (2) a signal of authorization or non-authorization of the service.

## Description

### Object of the Invention

The present invention relates to a car park time management and payment method for automobile vehicles, of the type wherein the parking is recorded in a remote payment server, which is sent a registration signal comprising an identifying signal of the vehicle or of the vehicle user and of the geographic position of the vehicle, for example by GPS coordinates or similar.

### Field of application of the Invention

The field of application of the present invention lies within the sector of the industry devoted to the manufacturing of recording devices and machines designed to control vehicle parking, in particular those parked in the public thoroughfare or even in enclosed premises, such as underground car parks or garages.

### Background of the invention

Embodiments of parking methods and systems are currently known for the online recording and management of paid parking, which normally adopt the form of computerized application (*"apps"*) for smartphone or tablet. These systems have a plurality of vehicle terminals and a remote payment centre which receives a signal from a vehicle terminal (e.g. the smartphone or tablet wherein the *"app"* is executed) when the vehicle parking starts.

According to one of these *"apps",* the payment centre records the parking duration until a signal is again received from the vehicle terminal that the parking has concluded. The vehicle terminal is designed to give a visible indication from the outside of the vehicle that the parking has been recorded. In a preferred embodiment, it uses the mobile phone network for the communication between the vehicle terminal and the payment centre, thus allowing the payment centre to manage parking over an area which is only limited by the coverage area of the mobile telephone system. The geographic data for a registration call may be recovered from the mobile telephone network (e.g. GSM).

Document WO2000011616A1, from Easy Park AS, discloses a method of this type. In www.easypark.net it discloses the commercial product-service linked to the previous PCT patent application. This document is considered to be the closest state of the art, and discloses a car park time management and payment method for automobile vehicles in accordance with the preamble of claim 1.

The Easy Park system is not free from drawbacks. A first drawback is that the system user, normally motor vehicle driver, must select and enter the parking area code in his smartphone or tablet himself. A second drawback is that the user must also enter the maximum time anticipated for completion of the parking service ("final time"), and be aware that this maximum time is not exceeded. If the user wants to exceed this time, he must adjust it to the new estimate, indicating this to the system and entering the new estimated "end time" in the smartphone or tablet. All of this may lead to confusion, hassles and taking extra time that one wants to avoid with the application of the method.

The present invention has the purpose of providing a solution to the aforementioned drawbacks mentioned.

### Explanation of the invention

For said purpose, the object of the present invention is a novel management method of times and payments in motor vehicle parking, of the aforementioned type, which is essentially characterized by the characterizing part of independent claim 1.

In dependent claims 2 and successive, preferred embodiments of the method of the present invention are described.

### Brief description of the drawings

A detailed description, of a preferred, although not exclusive, embodiment of the car park time management and payment method for automobile vehicles object of the invention, for a better understanding of which drawings are attached, given by way of illustrative and non-illustrative example. In said drawings:
Fig. 1 is a schematic view of the architecture and diagram of the elements which constitute the system for the implementation of the method of the invention;
Figs. 2 to 6 show different view of a *smart phone* device display corresponding phases of the mobile application (*"app"*) for the execution of the method; and
Figs. 7a and 7b are flow diagrams of the method according to the present invention.

### Detailed description of the drawings

In said drawings it is possible to observe the operating mode of the car park time management and payment method for automobile vehicles according to the principles of the present invention.

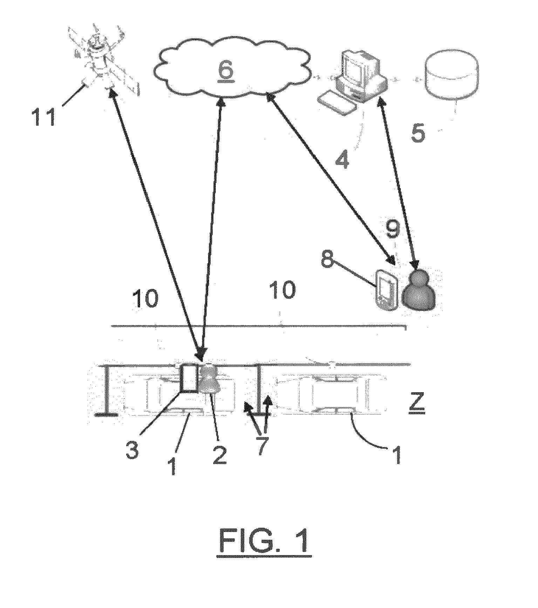

A user (2) wants to park the vehicle 1 in a parking space (7) in the public thoroughfare, in an area Z provided for said purpose (Fig. 1), with a specific hourly parking rate. The user (2), in the illustrated example, has a mobile device (3) (smartphone, tablet or similar), equipped with an RF wireless communication system, and with internet navigation system (6) (e.g. GSM, 3G, 4G, 5G or similar) wherein an application (or *"app"*) has been downloaded, for the execution of the management and payment method of the present invention. The smartphone (3) and the vehicle (1) have different own and independent methods of geolocation of their GPS coordinates, through satellite systems (11) of known type. The motor vehicle may use the GPS of its navigation system. Therefore, if the smartphone (3) is in the interior of the vehicle (1), both GPS systems shall appreciably detect the same coordinates, which shall be provided to the execution software of the present method.

Alternatively or simultaneously, the GPS coordinates can be provided to the management method by a wireless device (10), of ZigBee, Bluetooth, NFC or similar type, associated to a parking space. This last case is especially devised for underground car parks or located in closed areas wherein satellite communication is not possible or is highly impeded.

In conjunction with the above, the system has a server (4), wherein is executed the counterpart of the application of the method of the invention, communicated with internet (6), and with a database (5) for the present "*app*".

Finally, an attendant (9) or officer has a smartphone (8) or PDA for the execution of the corresponding part of the method, in particular, to be informed of the occupation of the parking space (7), and whether the parking service has been started and/or ended.

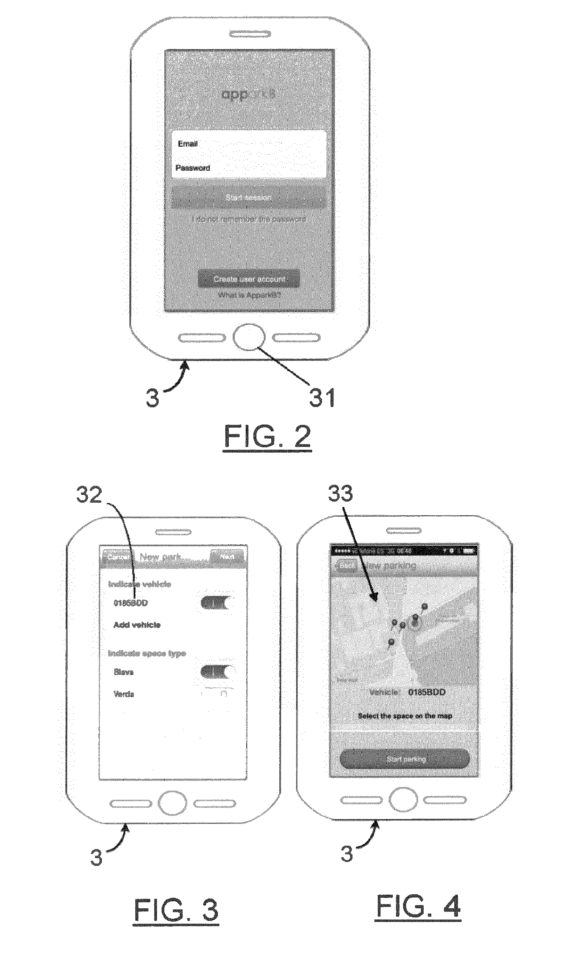

The parking is recorded in and managed by the remote payment server 4, provided with the server software, which is sent, from the "app" the mobile device (3), a registration signal comprising an identifying signal of the vehicle 1 and/or of the user (2), and of the geographic position of the vehicle (1). The identification may consist of a username or email (35) and/or a password (32), as illustrated in Fig. 3.

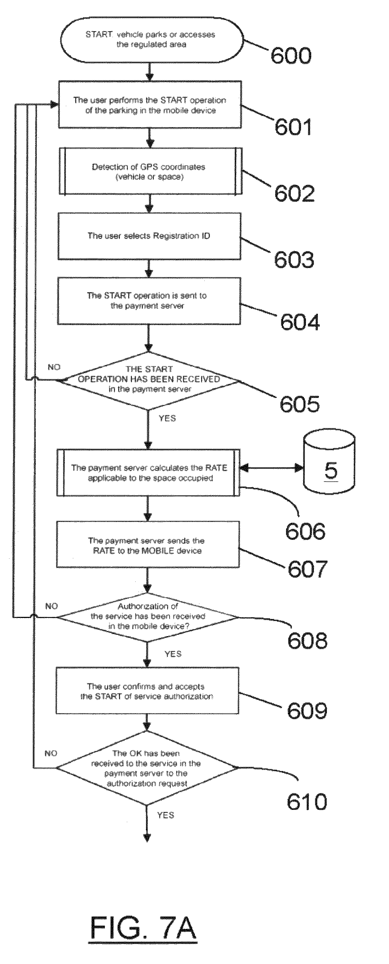

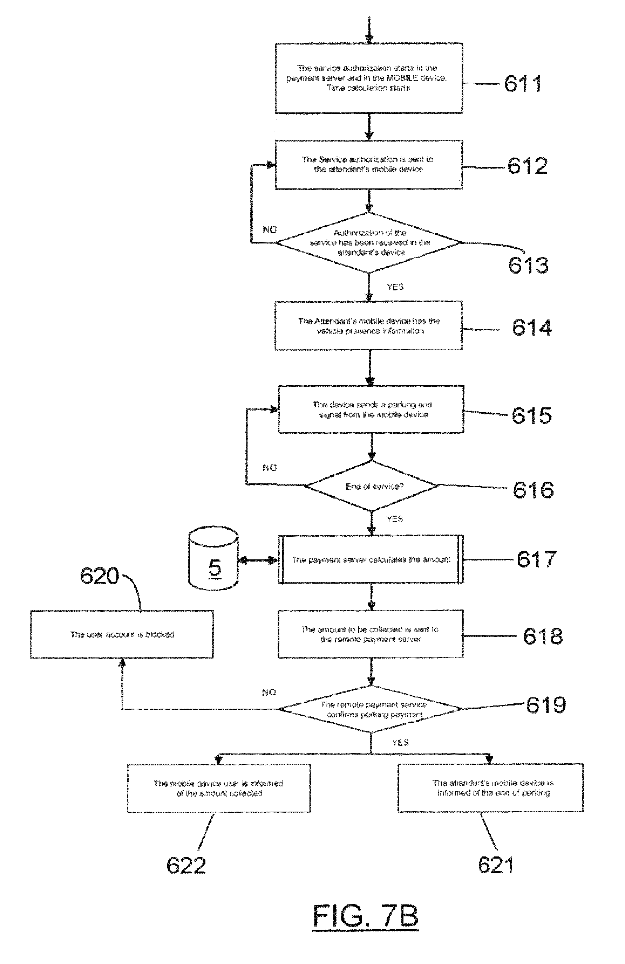

The method is explained below in accordance with the program steps or is explained below in accordance with the program steps or blocks of the block diagram of the algorithm of Figs. 7a, 7b associated to the method of the invention.

When the vehicle (1) accesses and is parked in a regulated parking space (7) (600), the user (2) introduces in the mobile device 3 a start instruction of the software of the method and of start of parking (601), for example by clicking the "enter" key (31) of Fig. 2. Then the mobile device (3) sends to the payment server (4), through internet (6) (or of an intranet or a Similar WAN), the registration and request of parking service signal, which includes the identification of the vehicle (1) and/or of the user (2), and the GPS positioning coordinates of the space (7) (602, 603).

In block or step (604), the start operation is sent to the payment server (4).

In (605), the server is asked whether it receives an interruption to the start of a parking service procedure according to the "*app*", so that if it does not receive it, it returns the control to step (601), whilst if it receives a start signal, the payment server 4 determines in (606), from the GPS geographic positioning data of the space (7), and, after consulting the database (5), on the information on areas of the database (5), the hourly rate applicable to the space (7) in question.

In (607), the payment server (4) sends to the mobile device (3) information confirming the identity of the vehicle (e.g. the registration number (32), as shown in Fig. 3), that relating to the hourly rate (*"Blava"* in the case of Fig. 3), the map (33) of the parking area and space (7) (Fig. 4) and a request to "start parking" (see 33 in Fig. 4), and possibly other conditions. When it receives a service authorization in the mobile device (3) (step 608), the user clicks on "start parking", in (609).

Then, in (610), the server (4) is asked whether it has received an authorization signal. If the response is "NO", it returns the control to step (601), until a new parking service start request is entered, in the same space and area or in a different space and area. If the response in (610) is "YES", then the payment server (4) starts the payment authorization in the server (4) and in the mobile device (3), and it starts to calculate the time for the establishment of the total price of the service (block 611).

In step (612) the data server (4) sends, through internet (6), to the mobile device (8) of an attendant (9), the information on the presence of a vehicle (1) in the space (7) of the area Z in question, and the information on the acceptance or non-acceptance by the user (2), i.e. if the parking is authorized or not. In (613) it asks if an attendant has received this information. If the response is "NO", then it continues sending the information to attendants (9) until one of them confirms the reception, after which the mobile device (8) of the attendant informed has all the information relating to the parking service in question in question (block 614).

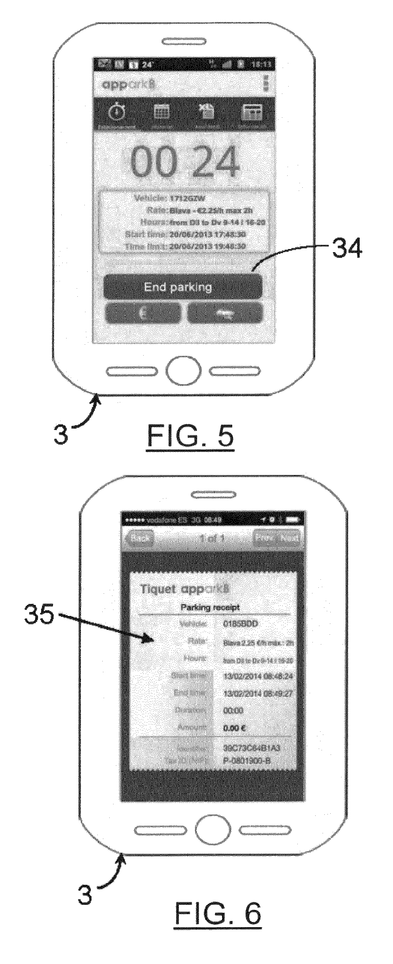

Then, in block (615), the server (4) sends and shows the mobile device (3) or leaves at the disposal thereof, the information relating to the service: start time of the parking service, time elapsed, rate type, total price to charge, information on the identity of the vehicle, etc. Fig. 5 shows the screen display of the smartphone corresponding to this phase.

The parking service is provided and calculated until the user wants to finalize the service, by pressing a key or touch key in the "end parking" display (34), in the smartphone (3) (see Fig. 5). For this, the program asks in (616) if it has received an "END" interruption request by the user (2). If the response is "NO", then the algorithm passes to step (623), wherein the software continues calculating the service time, from where it passes repetitively to step (615) of showing the information to the mobile device (3) wherein the "app" is executed, until the response in (616) is "YES", i.e. when the user clicks on "end parking".

The user (2) does not have to worry if he "goes over" a maximum permitted parking time. However, he may be periodically reminded by the "*app*" that the motor vehicle is parked and that a time that is going to be charged is running.

When the user (2) wants to finalize the parking service, and has sent an end signal from his mobile device (3) to the payment server (4), the payment server (4) calculates the amount, in block (617), in accordance with the total time calculated. In (619) it sends the amount calculated to a remote payment collection means, for example to a credit or debit card, or an electronic means of payment (PayPal®, Google Checkout, Paysafecard, etc.-type account) and payment collection is ordered. In step (618) the server of the means of collection is sent the question if the payment/collection has been made successfully and if it confirms payment of the parking service.

If the response is "NO", it can block the user account or card (block 620), and/or send him/her a sanction due to failure to pay a service.

If the response in (619) is "YES", then, in step 621 it informs the attendant (9) of the end of the parking. Finally, in step (622), via the display of the mobile device (3) (Fig. 6) it shows a ticket or receipt (35) with all the details of the parking service concluded: registration, start and end times, total calculated time of the service (1'3" in the case illustrated), rate type, cost due to time associated to the rate, and total time charged (€0.15 in the case illustrated).

Having sufficiently described the nature of the present invention, in addition to the way of putting it into practice, it is stated that everything that does not alter, change or modify its fundamental principle, is subject to variations in detail. In this regard, the scope of the invention may be extended to other objects, other than garments and motor vehicles.

## Claims

1. Car park time management and payment method for automobile vehicles, wherein the parking is recorded and managed in a remote payment server (4), provided with a server software,
**characterized in that** the vehicle (1) has associated a mobile device (3), for example a *"smartphone",* a tablet or a similar device integrated in the vehicle, equipped with a software processor for the execution of the method, and with a wireless communication apparatus such that,
when the vehicle (1) is parked in a parking space (7),
- the user (2) introduces in the mobile device (3) a start instruction of the software of the method and of start of parking;
- the mobile device (3) sends to the payment server (4), through a WAN network, for example internet (6), the registration signal and of request of parking service, which includes the identification of the vehicle (1) and/or of the user (2) of the vehicle, and the positioning coordinates of the space (7) or of the vehicle (1),
- the payment server (4) calculates, from the geographic positioning data of the space (7) and of the information from a database (5), the hourly rate applicable to the space (7);
- the payment server (4) sends to the mobile device (3) the information relating to the hourly rate and other conditions; and
- may send to the mobile device (3) of the user (2) a signal of authorization or non-authorization of the service.

2. Method according to claim 1, **wherein,** if the signal is of authorization, the user (2) accepts the hourly rate and he sends an OK signal to the payment server (4), and the payment server starts to calculate the time for the establishment of the total price of the service.

3. Method according to claim 1, **wherein** the payment server (4) informs, through the WAN (6), the mobile device (8) of an attendant (9), the presence of a vehicle (1) in the space (7) in question, and the information on the acceptance or non-acceptance by the user (2).

4. Method according to claim 1 or 3, wherein, when the user (2) wants to finalize the parking service, he sends an end of parking signal from his mobile device (3) to the payment server (4); with the payment server calculating (4) the amount, in accordance with the total time calculated; he charges the amount calculated, by a remote means of payment, for example to a credit or debit card, or to an electronic means of payment (type such as PayPal®, Google Checkout, Paysafecard, etc.); and informs the attendant (9) of the end of the parking.

5. Method according to claim 1, wherein said positioning coordinates of the space (7) are standard GPS coordinates provided to the mobile device (3) by the device software (3).

6. Method according to claim 1, wherein said positioning coordinates of the space (7) are standard GPS coordinates provided to the mobile device (3) by the navigation system of the vehicle (1).

7. Method according to claim 1, wherein said positioning coordinates of the space (7) are standard GPS coordinates provided to the mobile device (3) by a wireless communication device (10) fixed in an area (11) adjacent to the parking space (7).

8. Method according to claim 7, wherein the wireless communication device (10) is of ZigBee, Bluetooth, NFC-type or similar.
